# EUROPEAN PATENT APPLICATION

(11) **EP 4 817 745 A1**
(43) Date of publication of application: **07.10.2026**
(21) Application number: 26161861.5
(22) Date of filing: 03.03.2026
(51) Int. Cl.: B04C 5/04, B04C 5/12, B04C 11/00, B04C 5/28

(54) **YARN WASTE COLLECTION DEVICE**

(30) Priority: 31.03.2025 JP 2025058329
(71) Applicant: TMT Machinery, Inc., Osaka-shi, Osaka 541-0041 (JP)
(72) Inventor: IMANAKA, Akihito, Kyoto-shi, Kyoto, 612-8686 (JP); TAKASU, Shiori, Kyoto-shi, Kyoto, 612-8686 (JP); KITAGAWA, Shigeki, Kyoto-shi, Kyoto, 612-8686 (JP)
(74) Representative: Hoffmann Eitle

(57) **Abstract**

A function of an air discharge section is sufficiently ensured while discharge of yarn wastes from an air discharge section to the external space is suppressed. A yarn waste collection device 1 has a yarn waste transfer pipe 11, a yarn waste collector 13, and a cyclone separator 30 provided between the yarn waste transfer pipe 11 and the yarn waste collector 13. The cyclone separator 30 includes a separation section 32, a yarn waste discharge part 34d, an air discharge section 50 having an air discharge port 55, a regulator 52 which is provided to cover the air discharge port 55 in order to restrict movement of a yarn waste Yw to the external space. The regulator 52 is a porous plate member. The thickness direction of the regulator 52 is the same direction as the axial direction of the cylindrical separation section 32. The aperture area of one or more hole 56 formed in the regulator 52 is larger than the cross-sectional area of the yarn waste Yw. The thickness T (mm) of the regulator 52 is equal to or more than 5 mm and is equal to or less than 100 mm.

## Description

### BACKGROUND OF THE INVENTION

The present invention relates to a yarn waste collection device configured to collect yarn wastes.

Patent Literature 1 (Japanese Laid-Open Patent Publication No. 2024-52577) discloses a yarn waste collection device (fiber waste recovery device of Patent Literature 1) that is configured to collect yarn wastes generated during, for example, yarn threading to a textile machine such as a false-twist texturing machine. The yarn waste collection device has a yarn waste transfer pipe equipped with multiple suction parts through which yarn wastes are sucked, a yarn waste collector configured to collect the yarn wastes, and a cyclone separator provided between the yarn waste transfer pipe and the yarn waste collector to separate the yarn wastes from air. The yarn wastes sucked in together with the air from the suction parts are transferred through the inside of the yarn waste transfer pipe to the cyclone separator. Then, the yarn wastes and the air are separated by the cyclone separator, the air is discharged into the outside space (hereinafter, external space) of the cyclone separator, and the yarn wastes are discharged into the yarn waste collector.

The following will describe the cyclone separator. The cyclone separator has a cylindrical separation section (main body portion of Patent Literature 1) configured to separate yarn wastes from air and an air discharge section configured to discharge air to the outside. The separation unit is a member whose cylindrical axis extends substantially in the vertical direction, and the yarn waste transfer pipe is connected to its cylindrical surface. The air discharge section is connected to an upper part of the separation section. The yarn wastes transferred inside the yarn waste transfer pipe are sent to the separation unit, to begin with. The yarn wastes then move downward along the inner surface (i.e., the inner circumferential surface) of the cylindrical separation unit due to the centrifugal force and are discharged into the yarn waste collector. During the process of movement of the yarn wastes along the inner circumferential surface of the separation section, air is separated from the yarn wastes and discharged to the external space from the air discharge section.

### SUMMARY OF THE INVENTION

However, when the airflow inside the cyclone separator is disturbed, a yarn waste may rise up and be discharged to the external space from the air discharge section instead of heading toward the yarn waste discharge section. Such a yarn waste may get tangled with the yarn waste collection device, and may cause malfunctions. The discharge of the yarn waste can be suppressed by blocking the air discharge section. However, this hinders the flow of air and separation between the yarn waste and the air cannot be properly done.

An object of the present invention is therefore to provide a yarn waste collection device that sufficiently ensures the function of an air discharge section while suppressing discharge of yarn wastes from the air discharge section to the external space.

A yarn waste collection device of the present invention includes: a yarn waste transfer pipe through which a yarn waste is transferred together with air; a yarn waste collector which is configured to collect the yarn waste transferred through the yarn waste transfer pipe; and a cyclone separator which is provided between the yarn waste transfer pipe and the yarn waste collector and which is configured to separate the yarn waste transferred through the yarn waste transfer pipe from air and to allow the yarn waste to be collected by the yarn waste collector, the cyclone separator including: a separation section which includes a cylindrical member connected to the yarn waste transfer pipe and an upper member covering an upper portion of the cylindrical member and which is configured to separate the yarn waste from air; a yarn waste discharge section which is provided at a lower portion of the cylindrical member and is open downward to discharge, to the yarn waste collector, the yarn waste having been separated from air by the separation section; an air discharge section which is provided above the separation section and has an air discharge port through which air inside the separation section is discharged to an external space; and a regulator which is provided to cover the air discharge port in order to restrict movement of the yarn waste to the external space, the regulator being a porous plate member, the thickness direction of the regulator being identical with the axial direction of the cylindrical separation section, the aperture area of each of one or more hole formed in the regulator being larger than the cross-sectional area of the yarn waste, and the thickness T of the regulator being equal to or more than 5 mm and being equal to or less than 100 mm.

According to the aspect of the present invention, a yarn waste rising up inside the separation section is prevented from moving from the air discharge section to the external space, as the yarn waste hits the regulator and returns to the inside of the separation section. This suppresses the yarn waste from being discharged from the air discharge section to the external space. As a result of diligent study, the inventors of the subject application found that the discharge of air from the air discharge section is not significantly hindered when the thickness of the regulator is equal to or less than 100 mm. It is therefore possible to sufficiently achieve the function of the air discharge section even when the regulator is provided. In addition to the above, as a result of diligent study, the inventors of the subject application found that, when the thickness of the regulator is equal to or more than 5 mm in the cyclone separator structured as described above, the yarn waste is less likely to jut out and an end portion of the yarn waste is less likely to wrap onto a part of the regulator where no hole is formed, even when the end portion disadvantageously enters the hole. It appears that, due to the large thickness of the regulator, even if the yarn waste disadvantageously enters the hole, the yarn waste returns to the inside of the separation section before the yarn waste completely passes through the hole. Therefore, according to the configuration of the present invention, it is possible to avoid the yarn waste from wrapping onto the regulator, to suppress the inside of the cyclone separator from being clogged with the yarn waste, and to suppress the function of the air discharge section from being hindered.

The yarn waste collection device of the present invention is preferably arranged such that the maximum aperture area of a hole having the largest aperture area among the one or more hole formed in the regulator is 3 mm² or larger and is less than or equal to one-eighth of the aperture area of the air discharge port.

As a result of diligent study, the inventors of the subject application found that, in the cyclone separator structured as described above, when the maximum aperture area of the hole having the largest aperture area among the holes is 3 mm² or larger, the air discharge function of the air discharge section is further ensured. Furthermore, the inventors of the subject application found that, when the maximum aperture area of the hole having the largest aperture area among the holes is less than or equal to one-eighth of the aperture area of the air discharge port, it is possible to reduce the frequency of entrance of the end portion of the yarn waste into the hole of the regulator. Consequently, it is possible to further reliably avoid the yarn waste from wrapping onto the regulator and to further suppress the function of the air discharge section from being hindered.

The yarn waste collection device of the present invention is preferably arranged such that an open area ratio which is the ratio of the total aperture area of the one or more hole to the area of the regulator when viewed in the thickness direction is 40% or more.

According to the aspect of the present invention, by setting the open area ratio at 40% or more, the amount of air discharged from the air discharge section can be more reliably secured.

The yarn waste collection device of the present invention is preferably arranged such that the one or more hole are evenly formed in the regulator.

According to the aspect of the present invention, it is possible to eliminate a hole through which a yarn waste can easily pass, and to further reduce the risk of allowing the yarn waste to pass through the hole.

The yarn waste collection device of the present invention is preferably arranged such that the one or more hole are each regular hexagonal in shape when viewed in the thickness direction and are formed in a honeycomb arrangement in the regulator.

In the present invention, it is possible to reduce the interval between adjacent holes. In other words, it is possible to reduce the area of the part of the regulator where the holes are not formed. This makes it possible to increase the total aperture area of the holes while reducing the aperture area of each hole. It is therefore possible to achieve a sufficient discharge amount of air from the air discharge section while further reducing the frequency of passing of yarn wastes through the hole.

The yarn waste collection device of the present invention is preferably arranged such that a bottom surface of the regulator is on the same plane as an inner surface of the upper member of the separation section.

In the configuration of the cyclone separator provided in the yarn waste collection device of the present invention, air flows along the inner surface of the cylindrical separation section in the space surrounded by the upper member and the cylindrical member of the separation section. According to the aspect of the present invention, because the bottom surface of the regulator is on the same plane as the inner surface of the upper member of the separation section, air flows along the inner surface of the cylindrical separation section below the bottom surface of the regulator. On account of the airflow along the inner surface of the cylindrical separation section, the yarn waste rising up inside the separation section and heading toward the regulator moves upward (i.e., moves in a direction substantially identical with the thickness direction of the regulator) less strongly. As a result, the yarn waste becomes less easily pass through the holes of the regulator.

The yarn waste collection device of the present invention is preferably arranged such that the regulator is attachable to and detachable from the air discharge section.

In the present invention, the maintenance of the regulator can be easily performed.

### BRIEF DESCRIPTION OF THE DRAWINGS

FIG. 1 is a side view showing the outline of a false-twist texturing machine of an embodiment.
FIG. 2 is a schematic representation of a yarn waste collection device of the embodiment.
FIG. 3 is a perspective view of a cyclone separator.
FIG. 4 is a sectional view of the cyclone separator.
FIG. 5 is a plan view of a regulator.
FIG. 6 is a plan view of the regulator according to an example.
FIG. 7 is a table showing the state of jutting of yarn waste in each thickness of the regulator.

### DESCRIPTION OF THE PREFERRED EMBODIMENTS

The following will describe a preferred embodiment of the present invention with reference to figures. In the following description, a yarn waste collection device 1 equipped with a cyclone separator 30 according to the present invention will be described with the assumption that the device 1 is installed in a false-twist texturing machine 101.

### (Overall Structure of False-Twist Texturing Machine)

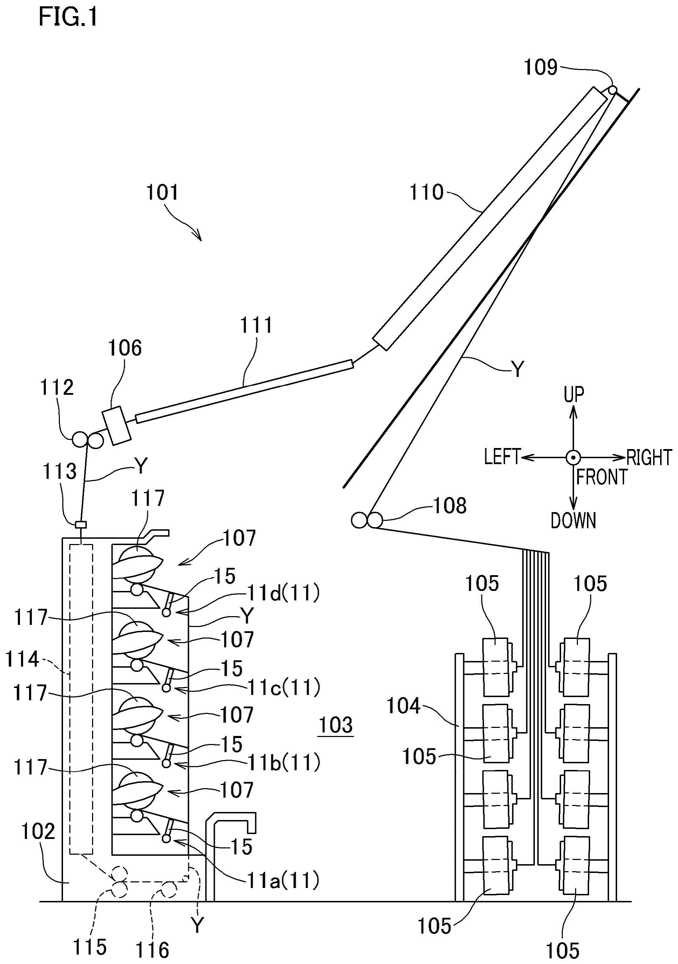

To begin with, the following describes the false-twist texturing machine 101. Hereinafter, the up-down direction, the front-rear direction, and the left-right direction in the false-twist texturing machine 101 are those shown in FIG. 1, for convenience of explanation. The up-down direction is the vertical direction in which the gravity acts. The above-described directions will be consistently used in the following descriptions.

The false-twist texturing machine 101 is, for example, configured as a textile machine that produces processed yarns that are rich in elasticity by false-twisting yarns Y made of thermoplastic synthetic fibers such as polyester or polyamide to impart crimp. The false-twist texturing machine 101 includes a main frame 102, a yarn supply creel 104, first feed rollers 108, shifter guides 109, first heaters 110, coolers 111, a false-twisting device 106, second feed rollers 112, interlace nozzles 113, a second heater 114, third feed rollers 115, oiling rollers 116, and winding devices 107.

In the yarn path from the yarn supply creel 104 to the winding devices 107, the following members are provided in this order from the upstream in a yarn running direction: the first feed rollers 108; the shifter guides 109; the first heaters 110; the coolers 111; the false-twisting device 106; the second feed rollers 112; the interlace nozzles 113; the second heater 114; the third feed rollers 115; and the oiling rollers 116. Each component will be detailed below.

The main frame 102 is provided to extend in the up-down direction. The yarn supply creel 104 is provided to oppose the main frame 102 over a working space 103, so as to hold multiple yarn supply packages 105. The working space 103 is a space where an operator performs operations such as yarn threading to each device.

The first feed rollers 108 are rollers that feed the yarns Y from the upstream side to the downstream side in the yarn running direction. To be more specific, the first feed rollers 108 are rollers for feeding the yarns Y supplied from the yarn supply creel 104 to the first heaters 110. The first feed rollers 108 are provided above the working space 103. The first feed rollers 108 are aligned in the front-rear direction.

The shifter guides 109 are provided between the first feed rollers 108 and the first heaters 110 in the yarn running direction. The shifter guides 109 are used to cause the yarns Y to pass through the first heaters 110 and the coolers 111 when threading the yarns Y to the false-twist texturing machine 101. In addition to this, the shifter guides 109 prevent twisting, which is applied to the yarns Y by the false-twisting device 106, from being propagated to the upstream side of the shifter guides 109 in the yarn running direction. The shifter guides 109 are aligned in the front-rear direction.

The first heaters 110 are configured to heat the yarns Y fed from the first feed rollers 108. The first heaters 110 are provided above the working space 103 and further above the first feed rollers 108. The first heaters 110 are aligned in the front-rear direction.

The coolers 111 are configured to cool the yarns Y heated by the first heaters 110. The coolers 111 are provided on the main frame 102 side of the first heaters 110 that are above the working space 103. The first heaters 110 and the coolers 111 are disposed above the working space 103 to extend obliquely upward away from the main frame 102. The coolers 111 are aligned in the front-rear direction.

The false-twisting device 106 is provided above of the main frame 102. The false-twisting device 106 is configured to false-twist the yarns Y supplied from the yarn supply creel 104. The false-twisting device 106 is, for example, a friction disc twister.

The second feed rollers 112 are rollers that feed the yarns Y from the upstream side to the downstream side in the yarn running direction. Specifically, the second feed rollers 112 are rollers that send the yarns Y twisted by the false-twisting device 106 to the interlace nozzles 113 and the second heaters 114. The second feed rollers 112 are provided above the main frame 102. The second feed rollers 112 are aligned in the front-rear direction. The yarn feeding speed of the second feed rollers 112 is higher than the yarn feeding speed of the first feed rollers 108. The yarns Y are therefore drawn between the first feed rollers 108 and the second feed rollers 112.

The interlace nozzles 113 are devices configured to interlace the yarns Y by injecting air thereto. The interlace nozzles 113 are provided above the main frame 102 and are provided below the second feed rollers 112. The interlace nozzles 113 are aligned in the front-rear direction.

The second heaters 114 are configured to heat the yarns Y interlaced by the interlace nozzles 113. The second heaters 114 are provided on the main frame 102 and are behind the winding devices 107 when viewed from the working space 103. The second heaters 114 extend in the up-down direction.

The third feed rollers 115 are rollers that feed the yarns Y from the upstream side to the downstream side in the yarn running direction. Specifically, the third feed rollers 115 are rollers that feed the yarns Y heated by the second heaters 114 to the winding devices 107 via the oiling rollers 116. The third feed rollers 115 are provided below the second heaters 114. The third feed rollers 115 are aligned in the front-rear direction. The yarn feeding speed of the third feed rollers 115 is lower than the yarn feeding speed of the second feed rollers 112. The yarns Y are therefore relaxed between the second feed rollers 112 and the third feed rollers 115.

The oiling rollers 116 are rollers for applying oil to the yarns Y. Each oiling roller 116 is, for example, a driven roller that does not actively rotate. The oiling rollers 116 are aligned in the front-rear direction.

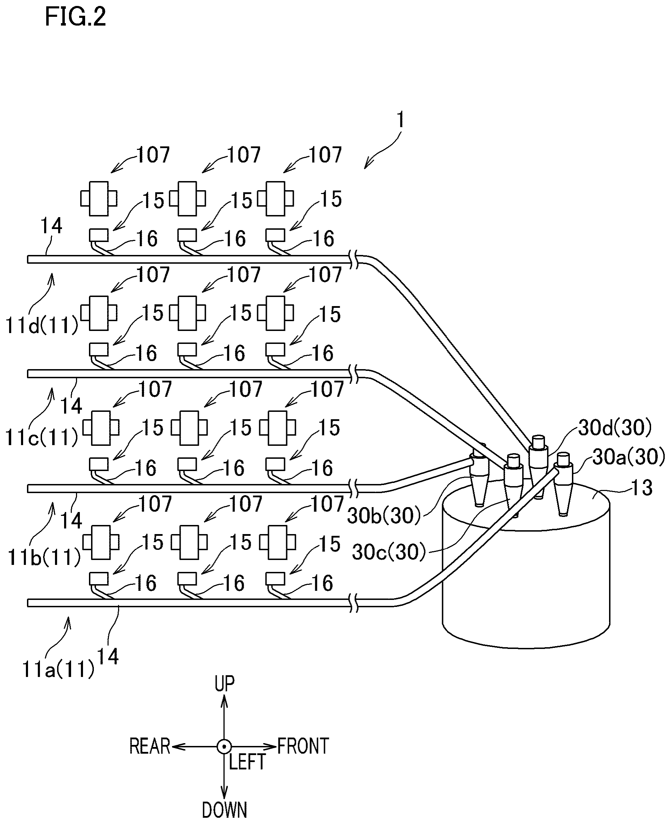

The winding devices 107 are configured to form packages 117 by winding the yarns Y, which have been false-twisted by the false-twisting device 106, onto unillustrated bobbins. The winding devices 107 are provided in the main frame 102. The winding devices 107 are provided to form four stages in the up-down direction. In each stage, the winding devices 107 are aligned in the front-rear direction (see FIG. 2).

As the devices are laid out in this way, the yarn path from the yarn supply creel 104 to the winding devices 107 is formed to surround the working space 103.

In the false-twist texturing machine 101 structured as described above, the yarns Y supplied from the yarn supply creel 104 are fed through the above-described devices and are then wound by the winding devices 107 to form the packages 117. The following will describe the details.

The yarns Y supplied from the yarn supply creel 104 are drawn between the first feed rollers 108 and the second feed rollers 112. The drawn yarns Y are twisted by the false-twisting device 106 and sent out. The twist formed by the false-twisting device 106 propagates to the shifter guides 109. The yarns Y having been twisted and drawn are heated by the first heaters 110 and cooled by the coolers 111, with the result that the twist is set. The yarns Y, whose twist has been thermally set, are unwound after passing through the false-twisting device 106 before reaching the second feed rollers 112.

On the yarns Y having been drawn and false-twisted in this way, interlacing portions are properly formed at the interlace nozzles 113 and hence the yarns Y are bundled. Subsequently, the yarns Y are thermally treated by the second heaters 114 while being relaxed between the second feed rollers 112 and the third feed rollers 115. Thereafter, the yarns Y are wound onto bobbins (not illustrated) by the winding devices 107 through the oiling rollers 116, with the result that packages 117 are formed. A fully wound package 117 is removed from the winding device 107 by the operator. A new bobbin is then attached to the winding device 107 by the operator, and the winding operation onto the bobbin is resumed. The replacement of the package 117 is performed in this way.

The yarn waste collection device 1 of the present embodiment is installed and used in the above-described false-twist texturing machine 101. The following describes the yarn waste collection device 1 of the present embodiment.

### (Yarn Waste Collection Device)

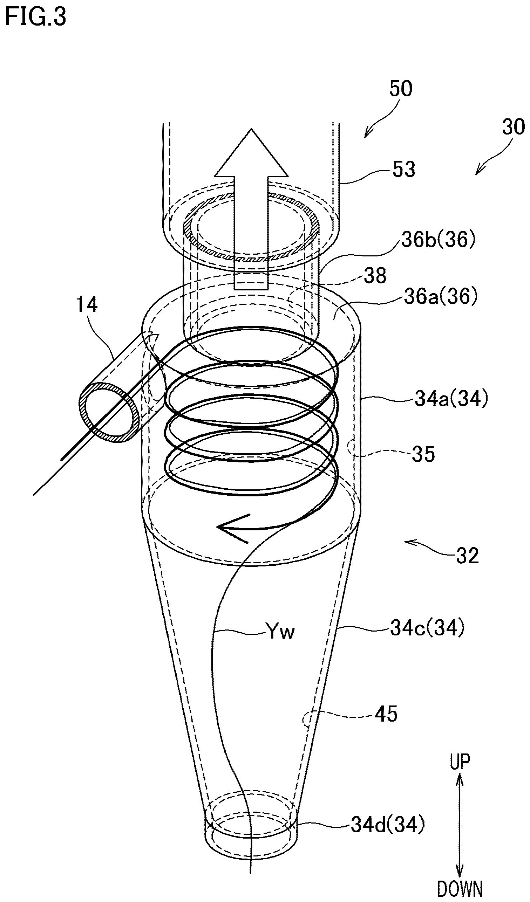

The following describes the yarn waste collection device 1 with reference to FIG. 2. FIG. 2 is a schematic representation of the yarn waste collection device 1 of the present embodiment. The yarn waste collection device 1 is configured to collect a yarn waste generated during, for example, yarn threading to the false-twist texturing machine 101. Hereafter, the yarn waste collected by the yarn waste collection device 1 is referred to as a yarn waste Yw (see FIG. 3). FIG. 3 shows a yarn waste that is relatively long (e.g., yarn waste that is 900m in length). The yarn waste Yw of the present embodiment, however, encompasses a yarn waste that is relatively short in length, a yarn waste aggregate in which two or more yarn wastes are entangled with each other, and so forth. As shown in FIG. 2, the yarn waste collection device 1 includes yarn waste transfer pipes 11 (in the present embodiment, four yarn waste transfer pipes 11a to 11d), one yarn waste collector 13, and cyclone separators 30 (in the present embodiment, four cyclone separators 30a to 30d). One yarn waste collector 13 is provided for plural yarn waste transfer pipes 11. The cyclone separators 30 are provided to one-to-one correspond to the respective yarn waste transfer pipes 11.

### (Yarn Waste Transfer Pipe)

The following will detail each yarn waste transfer pipe 11 with reference to FIG. 2. As shown in FIG. 2, the yarn waste transfer pipe 11 includes a main body pipe 14 and multiple suction parts 15 that suck in yarn wastes Yw. The main body pipe 14 is a hollow cylindrical pipe. A yarn waste Yw sucked in from a suction part 15 is transferred through the main body pipe 14. In the present embodiment, four yarn waste transfer pipes 11 are provided as described above.

The main body pipe 14 of each of the four yarn waste transfer pipes 11a to 11d is provided to extend in the front-rear direction at a position corresponding to each of the first to fourth stages of the winding devices 107 (see FIG. 1 and FIG. 2). To be more specific, the main body pipe 14 of the yarn waste transfer pipe 11a is provided to extend in the front-rear direction at a position corresponding to the first stage, i.e., the lowest stage of the winding devices 107. The main body pipe 14 of the yarn waste transfer pipe 11b is provided to extend in the front-rear direction at a position corresponding to the second lowest stage of the winding devices 107. The main body pipe 14 of the yarn waste transfer pipe 11c is provided to extend in the front-rear direction at a position corresponding to the third lowest stage of the winding devices 107. The main body pipe 14 of the yarn waste transfer pipe 11d is provided to extend in the front-rear direction at a position corresponding to the fourth stage, i.e., the highest stage of the winding devices 107. The position of the main body pipe 14 corresponding to the winding devices 107 is, for example, slightly to the right of and below the winding devices 107 aligned in the front-rear direction. The position of the main body pipe 14, however, is not limited to such a position.

Each main body pipe 14 has an end portion on one side in the front-rear direction (i.e., a rear end portion shown in FIG. 2) which is closed, and an end portion on the other side (a front end portion shown in FIG. 2) which is connected to the cyclone separator 30.

As shown in FIG. 2, the suction parts 15 are aligned along the front-rear direction which is the longitudinal direction of the main body pipe 14. As shown in FIG. 2, the suction parts 15 are positioned to correspond to the respective winding devices 107 aligned in the front-rear direction. In FIG. 2, the main frame 102 where the winding devices 107 are provided is not shown. As shown in FIG. 2, the suction parts 15 are connected to the main body pipe 14 via the suction pipes 16. Each suction part 15 is configured to suck in a yarn waste Yw by means of compressed air ejected from an unillustrated nozzle provided in the suction pipe 16. The yarn waste Yw sucked in together with the air from the suction part 15 is fed to the main body pipe 14 through the suction pipe 16.

### (Yarn Waste Collector)

The yarn waste collector 13 is a container used for collecting the yarn waste Yw transferred from the yarn waste transfer pipe 11. The yarn waste collector 13 is connected to a yarn waste discharge part 34d (described later) of each of the four cyclone separators 30a to 30d. As shown in FIG. 2, in the present embodiment, one yarn waste collector 13 is provided for four yarn waste transfer pipes 11a to 11d. The disclosure, however, is not limited to this arrangement. For example, one yarn waste collector 13 may be provided for one yarn waste transfer pipe 11.

### (Cyclone Separator)

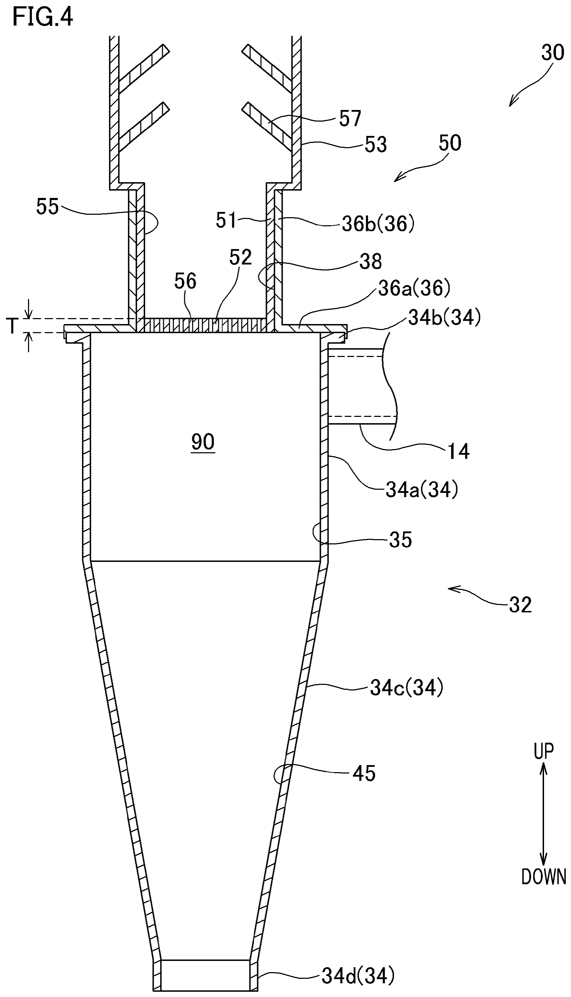

The following will describe the cyclone separator 30 with reference to FIG. 2 to FIG. 4. FIG. 3 is a perspective view of the cyclone separator 30. FIG. 4 is a sectional view of the cyclone separator 30.

The cyclone separator 30 has a function of separating air from the yarn waste Yw fed through the inside of the main body pipe 14 of the yarn waste transfer pipe 11 and discharging the yarn waste Yw to the yarn waste collector 13. In the present embodiment, four cyclone separators 30 are provided. As shown in FIG. 2, the four cyclone separators 30a to 30d are provided between the respective four yarn waste transfer pipes 11a to 11d and the yarn waste collector 13.

As shown in FIG. 3 and FIG. 4, the cyclone separator 30 includes a separation section 32 that separates a yarn waste Yw from air and an air discharge section 50 that discharges air to the external space of the cyclone separator 30.

### (Separation Section)

To begin with, the separation section 32 will be described. The separation section 32 separates air from a yarn waste Yw sent from the yarn waste transfer pipe 11. As shown in FIG. 4, the separation section 32 has a side wall member 34 (cylindrical member of the present invention) and a top panel member 36 (upper member of the present invention) that covers an upper part of the side wall member 34. The side wall member 34 and the top panel member 36 are, for example, made of resin. The side wall member 34 includes a cylindrical part 34a, a diameter enlarging part 34b which is above the cylindrical part 34a and has a diameter enlarged outward in the radial direction of the cylindrical part 34a, a tapered part 34c which is connected to a lower end portion of the cylindrical part 34a and is tapered toward the leading end of the cylinder, and a cylindrical yarn waste discharge part 34d (yarn waste discharge section of the present invention) which is connected to a lower end portion of the tapered part 34c.

The cylindrical part 34a has an axis extending in a direction substantially identical with the up-down direction, for example. The cylindrical part 34a extends in the up-down direction, is cylindrical in shape, and is open at an upper end portion and a lower end portion. The cylindrical part 34a communicates with the main body pipe 14 of the yarn waste transfer pipe 11. To be more specific, as shown in FIG. 3, an end portion on the other side of the main body pipe 14 (the front end portion shown in FIG. 2) communicates with the cylindrical part 34a along the circumferential direction of the inner circumferential wall 35 of the cylindrical part 34a.

The diameter enlarging part 34b is a part where the diameter is radially enlarged as compared to the cylindrical part 34a at an upper end portion of the cylindrical part 34a. The diameter enlarging part 34b is a part joined with the top panel member 36. It is noted that the diameter enlarging part 34b is not shown in FIG. 3.

An upper end portion of the tapered part 34c is connected to the cylindrical part 34a. A lower end portion of the tapered part 34c is connected to the later-described yarn waste discharge part 34d. The size of the inner diameter of the upper end portion of the tapered part 34c is substantially identical with the size of the inner diameter of the cylindrical part 34a. The inner diameter of the lower end portion of the tapered part 34c is smaller than the inner diameter of the upper end portion. The tapered part 34c has a hollow circular frustum shape that tapers from the upper end portion toward the lower end portion. The upper end portion and the lower end portion of the tapered part 34c are open. The tapered part 34c and the cylindrical part 34a are integrally formed.

The yarn waste discharge part 34d is a part from which a yarn waste Yw is discharged to the yarn waste collector 13. The yarn waste discharge part 34d has an axis that extends in a direction substantially identical with the up-down direction, is cylindrical in shape, and is open at an upper end portion and a lower end portion. In other words, the yarn waste discharge part 34d is open top and bottom. The upper end portion of the yarn waste discharge part 34d is connected to the lower end portion of the tapered part 34c. The lower end portion of the yarn waste discharge part 34d is connected to the yarn waste collector 13. The size of the inner diameter of the yarn waste discharge part 34d is substantially identical with the size of the inner diameter of the lower end portion of the tapered part 34c. In the present embodiment, the parts (the cylindrical part 34a, the diameter enlarging part 34b, the tapered part 34c, and the yarn waste discharge part 34d) of the side wall member 34 are integrally formed. However, the disclosure is not limited to this. For example, the yarn waste discharge part 34d may be a member independent from the side wall member 34. In this case, the yarn waste discharge part 34d is connected to a lower portion of the tapered part 34c of the side wall member 34.

As shown in FIG. 3 and FIG. 4, the top panel member 36 includes a disc-shaped top panel part 36a covering an upper portion of the side wall member 34 and a protruding part 36b which protrudes upward from around the center of the top panel part 36a. When viewed in the up-down direction, the top panel part 36a is donut-shaped such that a hole is formed at the center of the disc-shaped top panel part 36a. The diameter (outer diameter) of the top panel part 36a is larger than the inner diameter of the cylindrical part 34a. The top panel part 36a is joined with the diameter enlarging part 34b. The protruding part 36b is a part that protrudes upward from around the center of the top panel part 36a. As shown in FIG. 3 and FIG. 4, the protruding part 36b has a circular opening portion 38 that is coaxial with the cylindrical part 34a. That is to say, the protruding part 36b is cylindrical in shape and is coaxial with the cylindrical part 34a. The opening portion 38 formed in the protruding part 36b is arranged to allow a later-described insertion member 51 of the air discharge section 50 to be inserted.

### (Air Discharge Section)

The following describes the air discharge section 50. The air discharge section 50 discharges air separated from a yarn waste Yw in the separation section 32 to the external space of the cyclone separator 30. The air discharge section 50 is provided above the separation section 32. As shown in FIG. 3 and FIG. 4, the air discharge section 50 includes the insertion member 51, a regulator 52, and a discharge sound suppressor 53.

The insertion member 51 is connected to the top panel member 36. To be more specific, the insertion member 51 is arranged to be insertable into and removable from the opening portion 38 formed in the protruding part 36b of the top panel member 36 of the separation section 32. The insertion member 51 is cylindrical in shape and is coaxial with the cylindrical part 34a of the separation section 32. As shown in FIG. 4, inside the insertion member 51, an air discharge port 55 is formed. The aperture area of the air discharge port 55 is, for example, 1600 mm². However, the disclosure is not limited to this. The aperture area of the air discharge port 55 may be of any type on condition that air is properly discharged from the separation section 32. The outer diameter of the insertion member 51 is slightly smaller in size than the inner diameter of the opening portion 38. At an upper portion of the insertion member 51, a through hole (not illustrated) that allows a bolt to pass through is formed. The protruding part 36b of the top panel member 36 and the insertion member 51 are joined with each other by the bolt.

The regulator 52 is a member configured to suppress the discharge of a yarn waste Yw from the air discharge section 50 to the external space of the cyclone separator 30. As shown in FIG. 4, the regulator 52 is arranged to cover the air discharge port 55 at a lower end portion of the insertion member 51. It is noted that the regulator 52 is not shown in FIG. 3. The regulator 52 is a porous circular plate member whose thickness direction is parallel to the up-down direction. In the present embodiment, a single regulator 52 is provided at the air discharge section 50. The details of the regulator 52 will be given later.

The discharge sound suppressor 53 is configured to suppress the discharge sound generated when air is discharged to the outside of the cyclone separator 30. As shown in FIG. 4, the discharge sound suppressor 53 is connected to an upper end portion of the insertion member 51. The discharge sound suppressor 53 is cylindrical in shape and is coaxial with the insertion member 51. The inner diameter of the discharge sound suppressor 53 is larger in size than the inner diameter of the insertion member 51. On the discharge sound suppressor 53, frill members 57 are formed to protrude inward in the radial direction and obliquely upward from the inner wall. Although the detailed principle of suppression of discharge sound by the discharge sound suppressor 53 is not explained here, the presence of the above-described frill members 57 suppresses discharge sound generated by the air passing through the discharge sound suppressor 53. It is noted that the frill members 57 are not shown in FIG. 3.

In the cyclone separator 30 configured as described above, a yarn waste Yw and air are separated as follows. To begin with, a yarn waste Yw is fed with air from the main body pipe 14 to the cylindrical part 34a of the separation section 32. The yarn waste Yw fed to the cylindrical part 34a is transferred downward while rotating in the circumferential direction along the inner circumferential wall 35 of the cylindrical part 34a due to the centrifugal force, i.e., due to the centrifugal separation. The yarn waste Yw having moved downward inside the cylindrical part 34a is further transferred along the inner wall 45 of the tapered part 34c toward the yarn waste discharge part 34d. The yarn waste Yw is then discharged from the yarn waste discharge part 34d to the yarn waste collector 13. During the process in which the yarn waste Yw moves along the inner circumferential wall 35 of the cylindrical part 34a and the inner circumferential wall 35 of the tapered part 34c, air is separated from the yarn waste Yw and discharged to the outside from the air discharge section 50. In this way, the yarn waste Yw and air are separated in the cyclone separator 30. The cyclone separator 30 does not completely separate the yarn waste Yw from the air, and the yarn waste Yw heading toward the yarn waste discharge part 34d contains air. For this reason, from the yarn waste discharge part 34d, not only the yarn waste Yw but also the air which was not discharged from the air discharge section 50 are discharged together.

In this connection, when the airflow inside the cyclone separator 30 is disturbed, the yarn waste Yw may rise up and be discharged to the external space from the air discharge section 50 instead of heading toward the yarn waste discharge part 34d. Such a yarn waste Yw may get tangled with the yarn waste collection device 1, and may cause malfunctions. Under these circumstances, the inventors of the subject application conceived of partially closing the air discharge section 50 by a lattice-plate-shaped regulator 52. The yarn waste Yw heading toward the air discharge section 50 impinges on the lattice part of the regulator 52, with the result that the discharge of the yarn waste Yw to the external space through the air discharge section 50 is suppressed.

In this regard, the inventors of the subject application recognize that the yarn waste Yw is disadvantageously entangled with the lattice part of the regulator 52. To be more specific, the length of a yarn waste Yw sucked by the yarn waste collection device 1 at one time may reach about 900 m, for example. Although the entire yarn waste Yw do not pass through the lattice part, an end portion of the yarn waste Yw may disadvantageously wrap onto the regulator 52. It is presumed that such a problem arises due to the following reason, for example. An end portion of the yarn waste Yw may pass through the lattice part and disadvantageously reach the outside of the regulator 52. Subsequently, the end portion of the yarn waste Yw is pulled downward again due to the weight of the yarn waste Yw remaining inside the cyclone separator 30 and a downward airflow inside the cyclone separator 30. It is presumed that the yarn waste Yw wraps onto the lattice part of the regulator 52 as the end portion of the yarn waste Yw repeats this action. When the yarn waste Yw irreversibly wraps onto the lattice part, the yarn waste Yw cannot be discharged from the yarn waste discharge part 34d to the yarn waste collector 13, with the result that the yarn waste Yw is accumulated in the cyclone separator 30. As a result, a yarn waste Yw newly fed from the yarn waste transfer pipe 11 gets clogged inside the cyclone separator 30. Due to this, the yarn waste Yw cannot be properly collected. Under these circumstances, in order to allow the air discharge section 50 to fully function by suppressing the discharge of a yarn waste Yw from the air discharge section 50 to the external space and suppressing the clogging of the yarn waste Yw at the regulator 52, the regulator 52 of the present embodiment is structured as described below.

### (Regulator)

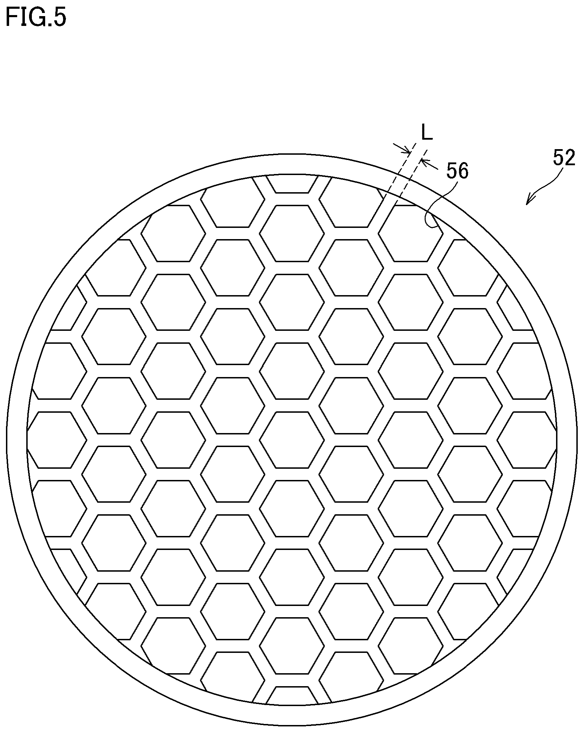

The following will detail the structure of the regulator 52 with reference to FIG. 4 and FIG. 5. FIG. 5 is a plan view of the regulator 52. As described above, the regulator 52 is a porous circular plate member. The holes 56 formed in the regulator 52 penetrate the regulator 52 in the up-down direction. The air separated from the yarn waste Yw in the separation section 32 can pass through the holes 56. On the other hand, part of the regulator 52 where the holes 56 are not formed suppresses the yarn waste Yw from being discharged to the external space. In the present embodiment, the regulator 52 is arranged to be detachable from and attachable to the insertion member 51 of the air discharge section 50. However, the disclosure is not limited to this. The insertion member 51 and the regulator 52 may be integrally formed. As shown in FIG. 4, the bottom surface of the regulator 52 is on the same plane as the bottom surface of the top panel member 36.

Furthermore, the thickness T (mm) of the regulator 52 (see FIG. 4) is equal to or more than 5 mm and is equal to or less than 100 mm. The thickness T of the regulator 52 is preferably 15 mm or less.

The holes 56 are uniformly formed in the regulator 52. More specifically, as shown in FIG. 5, each of the holes 56 is regular hexagonal in shape when viewed in the up-down direction (i.e., in the thickness direction of the regulator 52). The holes 56 are arranged in a honeycomb pattern in the regulator 52. In this present embodiment, each of holes 56 close to the outer edge of the regulator 52 is shaped such that a part of the regular hexagon is missing.

Furthermore, the interval L (mm) between adjacent holes 56 (see FIG. 5) is approximately 0.7 mm. With this arrangement, the strength of the part of the regulator 52 where the holes 56 are not formed can be ensured.

The aperture area of each of the holes 56 is larger than the cross-sectional area of the yarn waste Yw. To be more specific, the maximum aperture area A (mm²) of a hole 56 having the largest aperture area among the holes 56 is 3 mm² or larger and is less than or equal to one-eighth of the aperture area of the air discharge port 55. Specifically, in the present embodiment, the maximum aperture area A (mm²) is 200 mm² or less. The maximum aperture area A is preferably 70 mm² or less.

Furthermore, preferably, the open area ratio which is the ratio of the total aperture area of the holes 56 to the area of the regulator 52 when viewed in the up-down direction (i.e., in the thickness direction of the regulator 52) is 40% or more. It is noted that the open area ratio is 0% when the air discharge port 55 of the air discharge section 50 is completely closed by the regulator 52, and the open area ratio is 100% when no regulator 52 is provided and the air discharge port 55 is completely open.

### (Example)

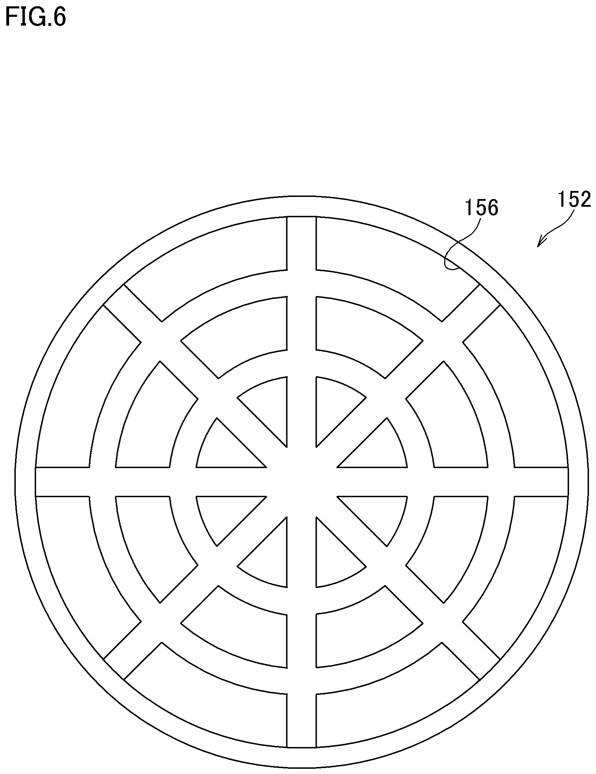

In regard to the regulator of the present invention, the performance of suppression of discharge of a yarn waste Yw from the air discharge section 50 to the external space was evaluated. The shape of a regulator 152 according to the example is shown in FIG. 6. The regulator 152 is a porous circular plate member having holes 156. It is, however, noted that the shape of the regulator 152 according to the example is different from that of the regulator 52 of the above embodiment. A yarn waste collection device 1 where the regulator 152 is provided is identical in configuration with the yarn waste collection device 1 of the embodiment above. As shown in FIG. 6, the regulator 152 has a lattice structure formed by three concentric circles and eight line segments which pass through the center of the concentric circles and are offset by 45 degrees each. The gaps in the lattice structure of the regulator 152 are the holes 156. In the same manner as in the embodiment above, the bottom surface of the regulator 152 is on the same plane as the bottom surface of the top panel member 36.

### (Evaluation of Suppression of Jutting of Yarn Waste in Each Thickness of Regulator)

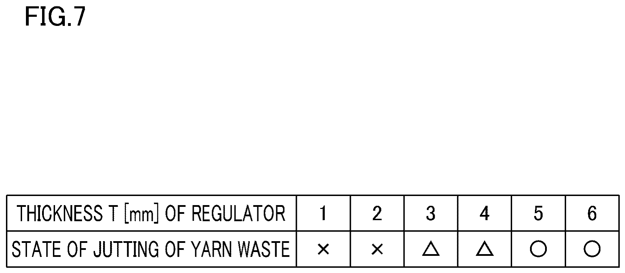

To begin with, we evaluated to what extent the yarn waste Yw jutted from the regulator 152 in each thickness T (mm) of the regulator 152 of the example. The evaluation results are shown in FIG. 7. FIG. 7 shows evaluation results when the yarn waste collection device 1 was operated and a yarn waste Yw was continuously sucked into the yarn waste transfer pipe 11. The thickness of the yarn waste Yw used was 75 denier. The thickness T (mm) of the regulator 152 was changed to six patterns (1 mm, 2 mm, 3 mm, 4 mm, 5 mm, and 6 mm), and the state of jutting of the yarn waste Yw at each thickness was evaluated. The evaluation of the state of jutting of the yarn waste Yw was performed by visual observation by an operator. A sign "x" in FIG. 7 indicates that the yarn waste Yw quickly jumps out from the regulator 152 or wraps onto the lattice part of the regulator 152. In FIG. 7, a sign "△" indicates that, when the yarn waste collection device 1 operates for a long time, a yarn waste Yw occasionally wraps onto the lattice part of the regulator 152. A sign "○" in FIG. 7 indicates that the yarn waste Yw does not jut out at all from the regulator 152.

According to FIG. 7, when the thickness T (mm) of the regulator 152 was 3 mm or more, while the jutting of the yarn waste Yw was suppressed to some degree, the wrapping of the yarn waste Yw onto the lattice part of the regulator 152 occurred. On the other hand, the jutting of the yarn waste Yw was further reliably suppressed when the thickness T (mm) of the regulator 152 was 5 mm or more. It is considered that the greater the thickness T of the regulator 152 is, the less likely the yarn waste Yw passes through the holes 156. It is further considered that, when the thickness T of the regulator 152 is great, even if an end portion of the yarn waste Yw disadvantageously goes out to the outside of the regulator 152, the yarn waste Yw is moved back to the inside of the separation section 32 before the yarn waste Yw completely passes through the hole 156 (or before the most of the yarn waste Yw passes through the hole 156). On this account, it is presumed that increasing the thickness T of the regulator 152 more reliably suppresses the jutting of the yarn waste Yw.

The larger the thickness T (mm) of the regulator 152 is, the more the air discharge from the air discharge port 55 is hindered. However, the inventors of the present application estimate that, if the thickness T (mm) is 100 mm or less, the degree of decrease in the performance of the air discharge from the air discharge port 55 is acceptable for operating the yarn waste collection device 1. In other words, if the thickness T (mm) of the regulator 152 is 100 mm or less, it is presumed that the air discharge from the air discharge port 55 is done relatively well and thus the separation of the yarn waste Yw from the air inside the separation section 32 is not significantly hindered.

### (Effects)

The yarn waste collection device 1 of the present embodiment includes the yarn waste transfer pipe 11 in which a yarn waste Yw is transferred with air, the yarn waste collector 13 which is configured to collect the yarn waste Yw transferred in the yarn waste transfer pipe 11, and the cyclone separator 30 which is provided between the yarn waste transfer pipe 11 and the yarn waste collector 13, which separates the yarn waste Yw transferred in the yarn waste transfer pipe 11 from the air, and which allows the yarn waste Yw to be collected by the yarn waste collector 13. The cyclone separator 30 includes: the separation section 32 which includes the side wall member 34 to which the yarn waste transfer pipe 11 is connected and the top panel member 36 covering the upper portion of the side wall member 34, the separation section 32 being configured to separate a yarn waste Yw from air; the yarn waste discharge part 34d which is connected to the lower portion of the side wall member 34 and is open downward to discharge, to the yarn waste collector 13, the yarn waste Yw having been separated from the air by the separation section 32; the air discharge section 50 which is connected to the top panel member 36 of the separation section 32 and has the air discharge port 55 through which the air inside the separation section 32 is discharged to the external space; and the regulator 52 which is provided to cover the air discharge port 55 and regulates the movement of the yarn waste Yw to the external space. The regulator 52 is a porous plate member. The thickness direction of the regulator 52 is the same direction as the axial direction of the cylindrical separation section 32. The aperture area of the holes 56 formed in the regulator 52 is larger than the cross-sectional area of the yarn waste Yw. The thickness T (mm) of the regulator 52 is equal to or more than 5 mm and is equal to or less than 100 mm.

According to the present embodiment, a yarn waste Yw rising up inside the separation section 32 is prevented from moving from the air discharge section 50 to the external space, as the yarn waste Yw hits the regulator 52 and returns to the inside of the separation section 32. This suppresses the yarn waste Yw from being discharged from the air discharge section 50 to the external space. As a result of diligent study, the inventors of the subject application found that the discharge of air from the air discharge section 50 is not significantly hindered when the thickness T of the regulator 52 is equal to or less than 100 mm. It is therefore possible to sufficiently achieve the function of discharging air from the air discharge section 50 even when the regulator 52 is provided.

In addition to the above, as a result of diligent study, the inventors of the subject application found that, when the thickness T of the regulator 52 is equal to or more than 5 mm in the cyclone separator 30 structured as described above, the yarn waste Yw is less likely to jut out and an end portion of the yarn waste Yw is less likely to wrap onto a part of the regulator 52 where no hole 56 is formed, even when the end portion disadvantageously enters the hole 56. It appears that, due to the large thickness of the regulator 52, even if the yarn waste Yw disadvantageously enters the hole 56, the yarn waste Yw returns to the inside of the separation section 32 before the yarn waste Yw completely passes through the hole 56 (or most of the yarn waste Yw passes through the hole 56). Another reason is that, even if the yarn waste Yw goes through the hole 56 and juts out to the outside of the regulator 52, an end portion of the yarn waste Yw only slightly juts out and the length of the part jutting out from the regulator 52 is insufficient to wrap onto the regulator 52. Therefore, according to the configuration of the present embodiment, it is possible to avoid the yarn waste Yw from wrapping onto the regulator 52, to suppress the inside of the cyclone separator 30 from being clogged with the yarn waste Yw, and to suppress the function of the air discharge section 50 from being hindered.

In addition to the above, in the yarn waste collection device 1 of the present embodiment, the maximum aperture area A (mm²) of a hole 56 having the largest aperture area among the holes 56 formed in the regulator 52 is 3 mm² or larger and is less than or equal to one-eighth of the aperture area of the air discharge port 55.

As a result of diligent study, the inventors of the subject application found that, in the cyclone separator 30 structured as described above, when the maximum aperture area A (mm²) of the hole 56 having the largest aperture area among the holes 56 is 3 mm² or larger, the air discharge function of the air discharge section 50 is further ensured. Furthermore, the inventors of the subject application found that, when the maximum aperture area A of the hole 56 having the largest aperture area among the holes 56 is less than or equal to one-eighth of the aperture area of the air discharge port 55, it is possible to reduce the frequency of entrance of the end portion of the yarn waste Yw into the hole 56 of the regulator 52. Consequently, it is possible to further reliably avoid the yarn waste Yw from wrapping onto the regulator 52 and to further suppress the function of the air discharge section 50 from being hindered.

In the yarn waste collection device 1 of the present embodiment, the open area ratio which is the ratio of the total aperture area of the holes 56 to the area of the regulator 52 when viewed in the thickness direction (up-down direction) is 40% or more.

According to the present embodiment, by setting the open area ratio at 40% or more, the amount of air discharged from the air discharge section 50 can be more reliably secured.

In the yarn waste collection device 1 of the present embodiment, the holes 56 are uniformly formed in the regulator 52.

According to the present embodiment, it is possible to eliminate a hole 56 through which a yarn waste Yw can easily pass, and to further reduce the risk of allowing the yarn waste Yw to pass through the hole 56.

In the yarn waste collection device 1 of the present embodiment, the holes 56 are each regular hexagonal in shape when viewed in the thickness direction (up-down direction), and are formed in a honeycomb arrangement in the regulator 52.

In the present embodiment, it is possible to reduce the interval L between adjacent holes 56. In other words, it is possible to reduce the area of the part of the regulator 52 where the holes 56 are not formed. This makes it possible to increase the total aperture area of the holes 56 while reducing the aperture area of each hole 56. It is therefore possible to achieve a sufficient discharge amount of air from the air discharge section 50 while further reducing the frequency of passing of yarn wastes Yw through the hole 56.

In the yarn waste collection device 1 of the present embodiment, the bottom surface of the regulator 52 is on the same plane as the inner surface of the separation section 32 (i.e., the bottom surface of the top panel member 36).

In the configuration of the cyclone separator 30 provided in the yarn waste collection device 1 of the present embodiment, air flows along the inner surface of the cylindrical separation section 32 (i.e., along the circumferential direction of the separation section 32) in the space surrounded by the top panel member 36 and the side wall member 34 in the separation section 32. According to the present embodiment, because the bottom surface of the regulator 52 is on the same plane as the bottom surface of the top panel member 36 of the separation section 32, air flows along the inner surface of the cylindrical separation section 32 below the bottom surface of the regulator 52. On account of the airflow along the inner surface of the cylindrical separation section 32, the yarn waste Yw rising up inside the separation section 32 and heading toward the regulator 52 moves upward (i.e., moves in a direction substantially identical with the thickness direction of the regulator 52) less strongly. As a result, the yarn waste Yw becomes less easily pass through the holes 56 of the regulator 52.

In the yarn waste collection device 1 of the present embodiment, the regulator 52 is arranged to be detachable from and attachable to the air discharge section 50.

In the present embodiment, the maintenance of the regulator 52 can be easily performed.

### (Modifications)

The following will describe modifications of the above-described embodiment. The members identical with those in the embodiment above will be denoted by the same reference symbols and the explanations thereof are not repeated.
(1) In the above embodiment, the regulator 52 is assumed to be a member whose thickness T is uniform. In this regard, the thickness T of the regulator 52 may not be uniform. In this case, the maximum thickness of the regulator 52 is 100 mm or less and the minimum thickness of the regulator 52 is 5 mm or more.
(2) In the present embodiment, a single regulator 52 is provided at the air discharge section 50. Alternatively, plural regulators 52 may be provided at the air discharge section 50. In this case, these regulators 52 are superposed in the up-down direction without intervals therebetween. The phrase "without intervals therebetween" encompasses a case where a slight interval is provided between neighboring regulators. The thickness T (mm) of the regulators 52 in this case is equal to the total thickness of the regulators 52. In the modification (2), the positions of the holes 56 of the regulators 52 that are superposed in the up-down direction may be deviated from one another. In this case, when viewed in the up-down direction, at least part of the holes 56 of one regulator 52 may overlap part of another regulator 52 where no hole 56 is formed. In such a case, the aperture area of each hole 56 of the regulator 52 indicates the area of a part of the hole 56, which penetrates the regulator 52 in the up-down direction.
(3) In the embodiment above, each of the holes 56 is regular hexagonal in shape when viewed in the up-down direction (i.e., in the thickness direction of the regulator 52). The disclosure, however, is not limited to this arrangement. For example, when viewed in the up-down direction, each of the holes 56 may be a regular polygon different from a regular hexagon, may be a regular circle, or may be a polygon that is not a regular polygon. Furthermore, the holes 56 may be formed unevenly in the regulator 52. In other words, when viewed in the up-down direction, the holes 56 having different shapes may be provided in the regulator 52.
(4) In the embodiment above, the maximum aperture area A (mm²) of a hole 56 having the largest aperture area among the holes 56 formed in the regulator 52 is 3 mm² or larger and is less than or equal to one-eighth of the aperture area of the air discharge port 55. The disclosure, however, is not limited to this arrangement. The maximum aperture area A (mm²) may be less than 3 mm², and may be greater than one-eighth of the aperture area of the air discharge port 55.
(5) In the embodiment above, the open area ratio which is the ratio of the total aperture area of the holes 56 to the area of the regulator 52 when viewed in the up-down direction (i.e., in the thickness direction of the regulator 52) may be 40% or less.
(6) In the embodiment above, the interval L (mm) between adjacent holes 56 (see FIG. 5) is approximately 0.7 mm or more. The disclosure, however, is not limited to this arrangement. The interval L (mm) between adjacent holes 56 (see FIG. 5) may be less than 0.7 mm ..
(7) In the embodiment above, the regulator 52 is provided at the lower end portion of the insertion member 51. The disclosure, however, is not limited to this arrangement. For example, the regulator 52 may be provided at an upper end portion of the insertion member 51, or at a lower end portion of the discharge sound suppressor 53.
(8) In the embodiment above, the separation section 32 has the cylindrical part 34a. Alternatively, the separation section 32 may have a tube part that is polygonal in cross section, in place of the cylindrical part 34a. In this case, the tapered part 34c is not a circular frustum but a truncated pyramid. Furthermore, the yarn waste discharge part 34d is angular rather than circular in cross-section.
(9) In the embodiment above, the four cyclone separators 30a to 30d are connected to the four yarn waste transfer pipes 11a to 11d, respectively. Alternatively, one cyclone separator 30 may be connected to four yarn waste transfer pipes 11a to 11d.
(10) In the embodiment above, the yarn waste collection device 1 equipped with a cyclone separator 30 is installed in the false-twist texturing machine 101. The disclosure, however, is not limited to this arrangement. For example, the yarn waste collection device 1 equipped with a cyclone separator 30 may be installed in a textile machine such as a spun yarn take-up machine.

## Claims

1. A yarn waste collection device (1) comprising:
a yarn waste transfer pipe (11) through which a yarn waste (Yw) is transferred together with air;
a yarn waste collector (13) which is configured to collect the yarn waste (Yw) transferred through the yarn waste transfer pipe (11); and
a cyclone separator (30) which is provided between the yarn waste transfer pipe (11) and the yarn waste collector (13) and which is configured to separate the yarn waste (Yw) transferred through the yarn waste transfer pipe (11) from air and to allow the yarn waste (Yw) to be collected by the yarn waste collector (13),
the cyclone separator (30) including:
a separation section (32) which includes a cylindrical member (34) connected to the yarn waste transfer pipe (11) and an upper member (36) covering an upper portion of the cylindrical member (34) and which is configured to separate the yarn waste (Yw) from air;
a yarn waste discharge section (34d) which is provided at a lower portion of the cylindrical member (34) and is open downward to discharge, to the yarn waste collector (13), the yarn waste (Yw) having been separated from air by the separation section (32);
an air discharge section (50) which is provided above the separation section (32) and has an air discharge port (55) through which air inside the separation section (32) is discharged to an external space; and
a regulator (52) which is provided to cover the air discharge port (55) in order to restrict movement of the yarn waste (Yw) to the external space,
the regulator (52) being a porous plate member,
the thickness direction of the regulator (52) being identical with the axial direction of the cylindrical separation section (32),
the aperture area of each of one or more hole (56) formed in the regulator (52) being larger than the cross-sectional area of the yarn waste (Yw), and
the thickness of the regulator (52) being equal to or more than 5 mm and being equal to or less than 100 mm.

2. The yarn waste collection device (1) according to claim 1, wherein, the maximum aperture area of a hole (56) having the largest aperture area among the one or more hole (56) formed in the regulator (52) is 3 mm² or larger and is less than or equal to one-eighth of the aperture area of the air discharge port (55).

3. The yarn waste collection device (1) according to claim 1 or 2, wherein, an open area ratio which is the ratio of the total aperture area of the one or more hole (56) to the area of the regulator (52) when viewed in the thickness direction is 40% or more.

4. The yarn waste collection device (1) according to any one of claims 1 to 3, wherein, the one or more hole (56) are evenly formed in the regulator (52).

5. The yarn waste collection device (1) according to claim 4, wherein, the one or more hole (56) are each regular hexagonal in shape when viewed in the thickness direction and are formed in a honeycomb arrangement in the regulator (52).

6. The yarn waste collection device (1) according to any one of claims 1 to 5, wherein, a bottom surface of the regulator (52) is on the same plane as an inner surface of the upper member (36) of the separation section (32).

7. The yarn waste collection device (1) according to any one of claims 1 to 6, wherein, the regulator (52) is attachable to and detachable from the air discharge section (50) .
